# EUROPEAN PATENT APPLICATION

(11) **EP 4 613 462 A1**
(43) Date of publication of application: **10.09.2025**
(21) Application number: 24793071.2
(22) Date of filing: 19.04.2024
(51) Int. Cl.: B29C 65/00, H01M 50/102, H01M 10/04, B29C 65/02, B29C 65/78, B29L 31/00

(54) **SECONDARY BATTERY SEALING DEVICE AND METHOD OF MANUFACTURING SECONDARY BATTERY BY USING SAME**

(30) Priority: 21.04.2023 KR 20230052883
(71) Applicant: LG Energy Solution, Ltd., Seoul 07335 (KR)
(72) Inventor: KIM, Mi Na, Daejeon 34122 (KR)
(74) Representative: Plasseraud IP
(86) International application number: PCT/KR2024/005330
(87) International publication number: WO 2024/219887

(57) **Abstract**

A sealing device according to an embodiment of the present disclosure may include a support unit configured to support one open side portion of a secondary battery in which an electrode assembly is embedded in a case so that the one open side portion faces upward, and a sealing tool including a vertically extended rotating shaft and a rotating body configured to be rotatable about the rotating shaft, and located on at least one side of the one side portion.

## Description

### TECHNICAL FIELD

### CROSS-REFERENCE TO RELATED APPLICATIONS

The present application claims priority to Korean Patent Application No. 10-2023-0052883 filed on April 21, 2023 in the Republic of Korea, the disclosures of which are incorporated herein by reference.

### TECHNICAL FIELD

The present disclosure relates to a secondary battery sealing device and a manufacturing method for secondary batteries using the sealing device.

### BACKGROUND ART

In order to prevent environmental pollution and develop alternative energy sources due to the depletion of petroleum resources, research and development on electric power generation based on eco-friendly energy sources are in progress. In particular, research on secondary batteries is being actively conducted, and various aspects such as materials, structures, processes, and stability of secondary batteries are being studied.

In order to improve the structural stability of secondary batteries, research and development in terms of the structure capable of sealing secondary batteries and the processes of sealing secondary batteries are continuously being conducted.

A sealing device may be used in the process of sealing secondary batteries. The sealing device may include a device for pressurizing and heating using a predetermined mold, and a pair of sealing tools capable of sealing an area to be sealed.

According to the prior art, when using a predetermined mold, it may be necessary to replace it depending on the type, specification, and size of a secondary battery, and in the case of a large secondary battery for high capacity, it may be difficult to perform effective sealing with a mold of limited size.

### DISCLOSURE OF THE INVENTION

### TECHNICAL PROBLEM

The present disclosure is designed to solve the problems of the related art, and therefore the present disclosure is directed to providing a secondary battery sealing device capable of adaptively and effectively sealing secondary batteries of different sizes and a manufacturing method for secondary batteries using the sealing device.

### TECHNICAL SOLUTION

A sealing device according to an embodiment of the present disclosure may include a support unit configured to support one open side portion of a secondary battery in which an electrode assembly is embedded in a case so that the one open side portion faces upward, and a sealing tool including a vertically extended rotating shaft and a rotating body configured to be rotatable about the rotating shaft, and located on at least one side of the one side portion.

A manufacturing method for secondary batteries according to an embodiment of the present disclosure may include a supporting step of supporting one open side portion of a secondary battery in which an electrode assembly is embedded in a case using a support unit so that the one open side portion faces upward with respect to the ground, a moving step of moving the support unit in a predetermined direction to move the secondary battery in the predetermined direction, and a sealing step of sealing the one side portion using rotating bodies disposed at both sides of the one side portion.

### ADVANTAGEOUS EFFECTS

According to a preferred embodiment of the present disclosure, it is possible to adaptively sealing secondary batteries of different sizes.

According to a preferred embodiment of the present disclosure, process efficiency may be increased as there is no need to replace a separate mold during the sealing process.

According to a preferred embodiment of the present disclosure, uniform sealing quality may be obtained.

According to a preferred embodiment of the present disclosure, the structural stability of the secondary battery may be improved.

### BRIEF DESCRIPTION OF THE DRAWINGS

FIG. 1 is a plan view showing a sealing portion of a secondary battery.
FIG. 2 is a conceptual view showing a sealing device according to a first embodiment of the present disclosure.
FIG. 3 is a conceptual view showing a sealing device according to a second embodiment of the present disclosure.
FIG. 4 is a side cross-sectional view showing rotating bodies according to embodiments of the present disclosure.
FIG. 5 is a conceptual view showing a sealing device according to a third embodiment of the present disclosure.
FIG. 6 is a conceptual view showing a sealing device according to a fourth embodiment of the present disclosure.
FIG. 7 is a conceptual view showing a sealing device according to a fifth embodiment of the present disclosure.
FIG. 8 is a conceptual view showing a sealing device according to a sixth embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

In addition, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

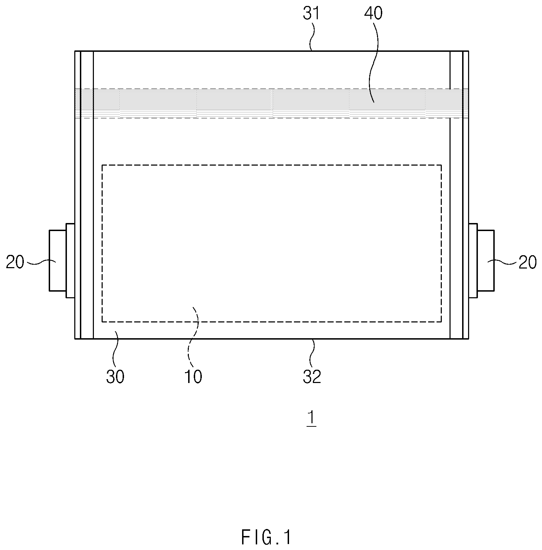

FIG. 1 is a plan view showing a sealing portion of a secondary battery.

The secondary battery 1 may include an electrode assembly 10. The electrode assembly 10 may be in a form in which a positive electrode and a negative electrode are alternately stacked with a separator interposed therebetween.

The secondary battery 1 may include an electrode lead 20. The electrode lead 20 may be connected to the electrode assembly 10 and may be extended to electrically connect the electrode assembly 10 to the outside. For example, the electrode lead 20 may be extended to protrude from the electrode assembly 10 to the outside of the case 30 to be described later.

The secondary battery 1 may include a case 30. The case 30 may have the electrode assembly 10 embedded therein. A portion of the electrode lead 20 may be located inside the case 30, and another portion may protrude to the outside of the case 30.

The case 30 may be sealed after the electrode assembly 10 is embedded. For example, the case 30 may include one side portion 31 and the other side portion 32. The other side portion 32 may be located on the opposite side of one side portion 31 based on the electrode assembly 10.

One side portion 31 is an open portion and may be a portion where sealing is performed. The other side portion 32 may be an unopened portion, but is not limited thereto.

The secondary battery 1 may have an electrolyte therein. For example, the electrolyte may also be embedded inside the case 30 together with the electrode assembly 10.

The secondary battery 1 may include a sealing portion 40. The sealing portion 40 may be a sealed portion using a sealing device to be described later. The portion of the secondary battery 1 that is outer to the sealing portion 40 may be removed after the sealing step, but is not limited thereto.

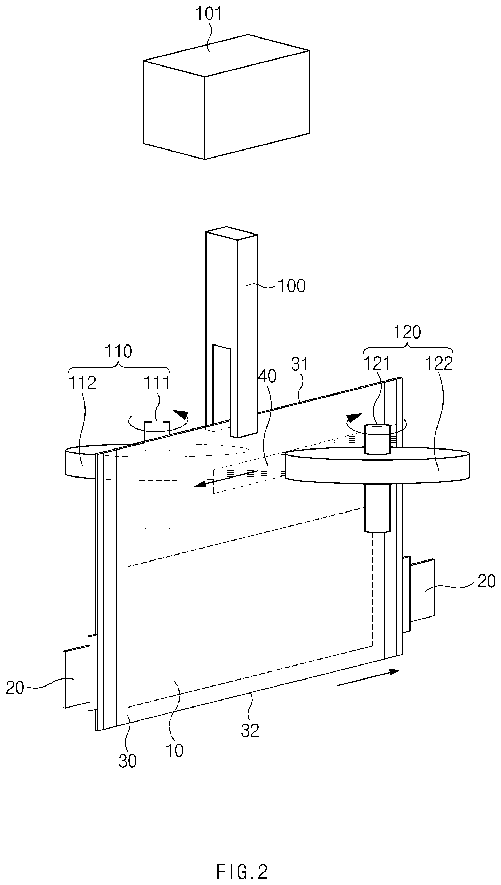

FIG. 2 is a conceptual view showing a sealing device according to a first embodiment of the present disclosure. The description of the above-described embodiment may be applied equally or similarly to this embodiment.

The sealing device may include a support unit 100.

The support unit 100 may be configured to support one open side portion 31 of the secondary battery 1 in which the electrode assembly 10 is embedded in the case 30 so that the one open side portion 31 faces upward. As the support unit 100 supports the one side portion 31, the electrolyte embedded in the secondary battery 1 may not leak out.

The support unit 100 may be a gripper configured to be movable in the vertical direction with respect to the one side portion 31. The end of the gripper that grips the one side portion 31 and the one side portion 31 may be in surface contact. As the gripper and the one side portion 31 come into surface contact, the support unit 100 may stably support the one side portion 31 while preventing damage to the one side portion 31.

The sealing device may include a sealing tool. The sealing tool may be located on at least one side of the one side portion 31. The sealing tool may be provided to pressurize and heat the one side portion 31 on both sides of the one side portion 31.

The sealing tool may include a rotating shaft. The rotating shaft may extend vertically. For example, the rotating shaft may extend a predetermined length in a direction perpendicular to the ground.

The sealing tool may include a rotating body. The rotating body may be provided to be rotatable about the rotating shaft.

Hereinafter, the sealing tool will be described in more detail.

The sealing tool may include a first sealing tool 110 and a second sealing tool 120.

The first sealing tool 110 may include a first rotating shaft 111 extending vertically from one side of the one side portion 31 and a first rotating body 112 provided to rotate about the first rotating shaft 111.

The second sealing tool 120 may include a second rotating shaft 121 extending vertically from the other side of the one side portion 31 and a second rotating body 122 provided to rotate about the second rotating shaft 121.

The first rotating body 112 and the second rotating body 122 may rotate to seal the one side portion 31 along the length direction of the one side portion 31. For example, the first rotating body 112 and the second rotating body 122 may seal the one side portion 31 through heating and/or pressurizing. The first rotating body 112 and the second rotating body 122 may form the sealing portion 40 through sealing.

The distance between the first rotating shaft 111 and the second rotating shaft 121 may be adjusted. The intensity of heating and/or pressurizing may be adjusted by adjusting the distance between the first rotating shaft 111 and the second rotating shaft 121.

As the distance between the first rotating shaft 111 and the second rotating shaft 121 is adjusted, a portion having different sealing strengths may be formed along the length direction of the one side portion 31. For example, the sealing strength may be strengthened as the distance between the first rotating shaft 111 and the second rotating shaft 121 is decreased, and the sealing strength may be weakened as the distance between the first rotating shaft 111 and the second rotating shaft 121 is increased. By adjusting the distance between the first rotating shaft 111 and the second rotating shaft 121, the sealing strength along the length direction of the one side portion 31 may be adjusted.

The first rotating body 112 and the second rotating body 122 may be adjustable in height. For example, the height of the first rotating body 112 and the second rotating body 122 may be adjustable along the first rotating shaft 111 and the second rotating shaft 121, respectively. By adjusting the height of the first rotating body 112 and the second rotating body 122, the height of the sealing portion 40 formed on the one side portion 31 may be adjusted.

The sealing device may include a moving unit 101. The moving unit 101 may be provided to move the support unit 100 in a predetermined direction. For example, the moving unit 101 may move the support unit 100 so that the support path where the support unit 100 moves does not interfere with the sealing tools 110, 120.

When the sealing device is provided with the rotating bodies 112, 122 to seal through rotation with the one side portion 31 of the secondary battery 1 facing upward, sealing may be performed adaptively for secondary batteries of different sizes without leakage of the electrolyte.

In addition, since the rotating bodies 112, 122 perform sealing through rotation, there is no need to replace a separate mold during the sealing process, which may increase process efficiency. Accordingly, uniform sealing quality may be obtained.

If uniform sealing quality for the secondary battery 1 is obtained, the structural stability of the secondary battery may be improved.

The sealing device may also further include a trailer. For example, the trailer may be configured to move while supporting the other side portion 32 provided on the opposite side of the one side portion 31 based on the electrode assembly 10. In other words, for stable movement of the secondary battery 1, the one side portion 31 may be supported by the support unit 100, and the other side portion 32 may be supported by the trailer.

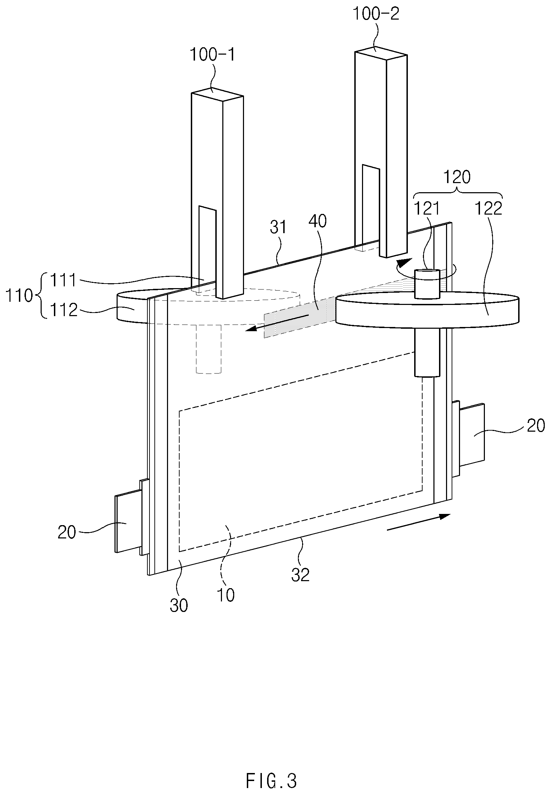

FIG. 3 is a conceptual view showing a sealing device according to a second embodiment of the present disclosure. The description of the above-described embodiment may be applied equally or similarly to this embodiment.

The sealing device may have a plurality of support units. For example, the sealing device may include a first support unit 100-1 and a second support unit 100-2. The first support unit 100-1 and the second support unit 100-2 may each be in the form of a gripper. **In** other words, the sealing device may include a plurality of gripper-shaped support units 100-1, 100-2 provided along the one side portion 31.

**In** the above description, two support units are illustrated, but this is not particularly limited. When a plurality of support units are provided in the sealing device, the one side portion 31 of the secondary battery 1 may be supported more stably.

The secondary battery 1 may be manufactured by a manufacturing method including a sealing step using the sealing device described above.

The manufacturing method for a secondary battery may include a supporting step. The supporting step may be a step of supporting the one open side portion 31 of the secondary battery 1 in which the electrode assembly 10 is embedded in the case 30 using the support unit 100 so that the one open side portion 31 faces upward with respect to the ground.

The manufacturing method for a secondary battery may include a moving step. The moving step may be a step of moving the support unit 100 in a predetermined direction to move the secondary battery 1 in the predetermined direction.

The manufacturing method for a secondary battery may include a sealing step. The sealing step may be a step of sealing the one side portion 31 using rotating bodies 112, 122 disposed on both sides of the one side portion 31.

The sealing step may include a non-uniform sealing process. The non-uniform sealing process may be a process in which a portion having different sealing strengths along the length direction of the one side portion 31 is formed by adjusting the distance between the rotating bodies 112, 122.

The sealing step may include a process of sealing by selectively transferring heat and pressure to the rotating bodies 112, 122. For example, the sealing portion 40 may be formed by transferring heat and pressure to only some of the rotating bodies 112, 122.

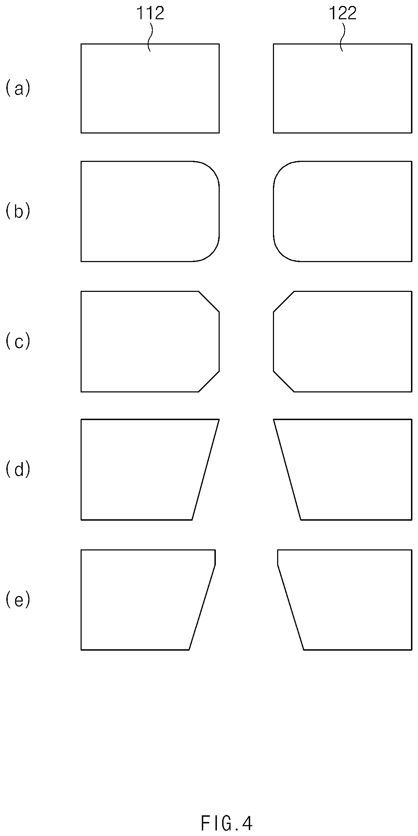

FIG. 4 is a side cross-sectional view showing rotating bodies according to embodiments of the present disclosure. The description of the above-described embodiment may be applied equally or similarly to this embodiment. FIGS. 4(a) to 4(e) may illustrate side cross-sectional views of the rotating bodies 112, 122. The direction of the rotating shaft may be formed in the vertical direction of the rotating bodies 112, 122 of FIGS. 4(a) to 4(e).

Referring to FIGS. 4(a) to 4(c), the outer circumferential surfaces of the rotating bodies 112, 122 may be formed to be flat with respect to the direction of the rotating shaft. For example, when the rotating bodies 112, 122 pressurize the one side portion 31, the flat surfaces (pressurizing surfaces) may face each other.

Referring to FIG. 4(b), the outer circumferential surfaces of the rotating bodies 112, 122 may include round portions having rounded edges. For example, the round portions of the rotating bodies 112, 122 may be formed at the edges of the pressurizing surfaces.

Referring to FIG. 4(c), the outer circumferential surfaces of the rotating bodies 112, 122 may include inclined portions inclined with respect to the direction of the rotating shaft.

Referring to FIG. 4(d), the entire outer circumferential surface of the rotating bodies 112, 122 may be formed to be inclined.

Referring to FIG. 4(e), upper ends of the outer circumferential surfaces of the rotating bodies 112, 122 may be formed to be flat, and the remaining portions may be formed to be inclined.

The pressurizing surfaces of the outer circumferential surfaces of the above-described rotating bodies 112, 122 are illustrative and not limited to the above-described embodiments.

When the one side portion 31 is pressurized with a flat pressurizing surface, the pressurized area of the one side portion 31 may be effectively pressurized with a predetermined pressurizing strength.

When the one side portion 31 is pressurized with a pressurizing surface including an inclined shape, the sealing strength for a specific area may be increased, and internal materials (e.g. an electrolyte) or foreign substances during sealing may be prevented from moving upward.

When the pressurizing surface includes a round shape, the surface of the one side portion 31 may be prevented from being damaged.

The pressurizing surfaces of the outer circumferential surfaces of the rotating bodies 112, 122 may be implemented in various ways depending on the sealing strength, sealing area, and characteristics of the secondary battery 1.

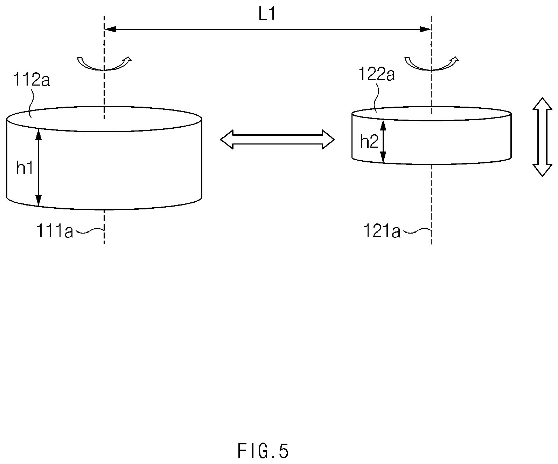

FIG. 5 is a conceptual view showing a sealing device according to a third embodiment of the present disclosure. The description of the above-described embodiment may be applied equally or similarly to this embodiment.

The first rotating body 112a and the second rotating body 122a may be in the form of a cylinder having different heights. For example, the first rotating body 112a may be in the form of a cylinder having a first height h1. The second rotating body 122a may be in the form of a cylinder having a second height h2 smaller than the first height h1.

The second rotating body 122a may be adjustable in height. For example, the height of the second rotating body 122a may be adjusted along the second rotating shaft 121a, thereby changing its position facing the first rotating body 112a. In this case, the formation position of the sealing portion 40 may be adjusted.

By adjusting the separation distance L1 between the first rotating body 112a and the second rotating body 122a, the sealing strength of the sealing portion 40 may also be adjusted.

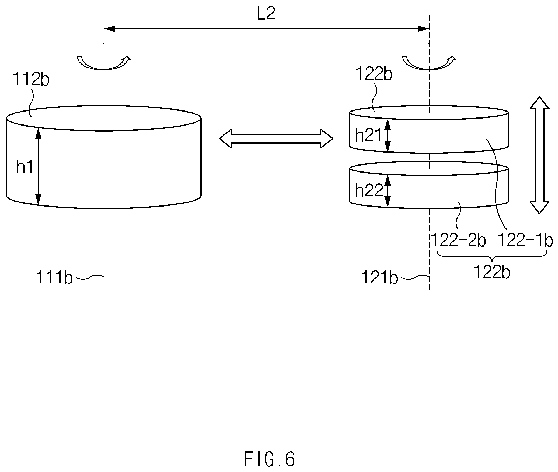

FIG. 6 is a conceptual view showing a sealing device according to a fourth embodiment of the present disclosure. The description of the above-described embodiment may be applied equally or similarly to this embodiment.

The second rotating body 122b may include a plurality of rotating units. For example, the second rotating body 122b may include a plurality of rotating units 122-1b, 122-2b provided along the second rotating shaft 121b. The plurality of rotating units may include an upper rotating unit 122-1b and a lower rotating unit 122-2b.

The first rotating body 112b may be in the form of a cylinder having the first height h1. The upper rotating unit 122-1b may have a height of h21, and the lower rotating unit 122-2b may have a height of h22.

The sum of the height h21 of the upper rotating unit 122-1b and the height h22 of the lower rotating unit 122-2b may be less than the first height h1. However, it is not limited thereto.

When the sum of the height h21 of the upper rotating unit 122-1b and the height h22 of the lower rotating unit 122-2b is less than the first height h1, the plurality of rotating units 122-1b, 122-2b may move along the second rotating shaft 121b within the range of the first height h1 of the first rotating body 112b. In this case, the degree of freedom for the formation range of the sealing portion 40 may be improved.

The sealing portion 40 may be formed by transferring heat and pressure to only some of the plurality of rotating units 122-1b, 122-2b. In this case, the degree of freedom for the formation range of the sealing portion 40 may be improved.

There may be no particular limitation on the number of the plurality of rotating units.

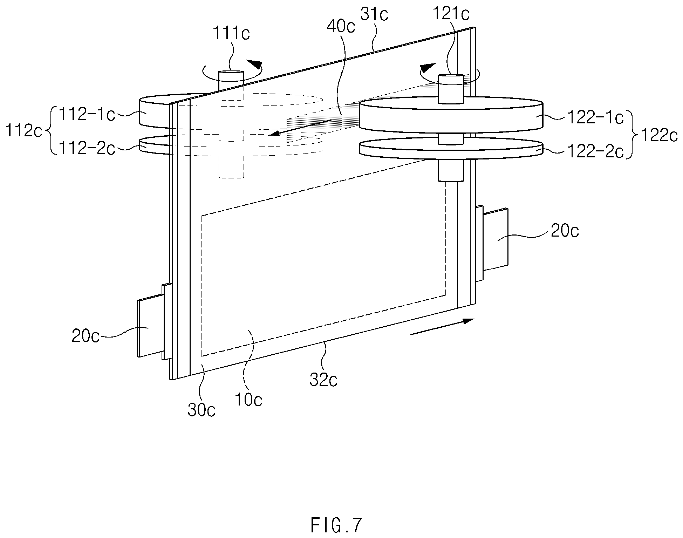

FIG. 7 is a conceptual view showing a sealing device according to a fifth embodiment of the present disclosure. The description of the above-described embodiment may be applied equally or similarly to this embodiment.

The first rotating body 112c may include a plurality of rotating units. For example, the first rotating body 112c may include a first rotating unit 112-1c and a second rotating unit 112-2c along the first rotating shaft 111c.

The second rotating body 122c may include a plurality of rotating units. For example, the second rotating body 122c may include a third rotating unit 122-1c and a fourth rotating unit 122-2c along the second rotating shaft 121c.

Heat and pressure may be transferred to some of the plurality of rotating units. For example, heat and pressure may be selectively transferred to some of the rotating units among the first rotating unit 112-1c, the second rotating unit 112-2c, the third rotating unit 122-1c, and the fourth rotating unit 122-2c to form the sealing portion 40c.

Some rotating units to which heat and pressure are not transferred may serve to support the one side portion 31c. For example, some rotating units to which heat and pressure are not transferred may function as transfer rollers.

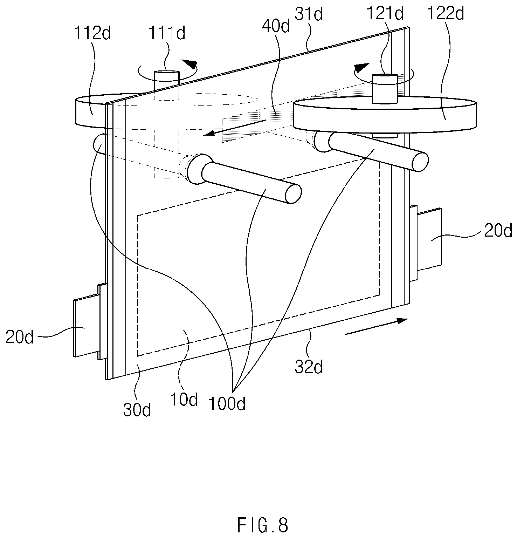

FIG. 8 is a conceptual view showing a sealing device according to a sixth embodiment of the present disclosure. The description of the above-described embodiment may be applied equally or similarly to this embodiment.

The support unit 100d may include adsorbers. For example, the support unit 100d may include adsorbers absorbed on both sides of the one side portion 31d. The adsorbers may be adsorbed on both sides of the one side portion 31d to support the one side portion 31d.

When the support unit 100d moves in support of the one side portion 31d, the support unit 100d, the first rotating shaft 111d, the first rotating body 112d, the second rotating shaft 121d, and the second rotating body 122d may not interfere with each other on the path.

When the support unit 100d includes adsorbers, it may have the effect that the one side portion 31d may be stably supported.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [LIST OF REFERENCE NUMERALS]

1: Secondary battery
10, 10c, 10d: Electrode assembly
20, 20c, 20d: Electrode lead
30, 30c, 30d: Case
31, 31c, 31d: One side portion
32, 32c, 32d: The other side portion
40, 40c, 40d: Sealing portion
100, 100d: Support unit
100-1: First support unit
100-2: Second support unit
101: Moving unit
110, 110a, 110b: First sealing tool
111, 111a, 111b, 111c, 111d: First rotating shaft
112, 112a, 112b, 112c, 112d: First rotating body
112-1c: First rotating unit
112-2c: Second rotating unit
120, 120a, 120b: Second sealing tool
121, 121a, 121b, 121c, 121d: Second rotating shaft
122, 122a, 122b, 122c, 122d: Second rotating body
122-1b: Upper rotating unit
122-2b: Lower rotating unit
122-1c: Third rotating unit
122-2c: Fourth rotating unit

## Claims

1. A sealing device comprising:
a support unit configured to support one open side portion of a secondary battery in which an electrode assembly is embedded in a case so that the one open side portion faces upward; and
a sealing tool comprising a vertically extended rotating shaft and a rotating body configured to be rotatable about the rotating shaft, and located on at least one side of the one side portion.

2. The sealing device according to claim 1,
wherein the sealing tool comprises:
a first sealing tool provided with a first rotating shaft extended vertically at one side of the one side portion and a first rotating body configured to rotate about the first rotating shaft; and
a second sealing tool provided with a second rotating shaft extended vertically at the other side of the one side portion and a second rotating body configured to rotate about the second rotating shaft.

3. The sealing device according to claim 2,
wherein the first rotating body and the second rotating body are configured to rotate to seal the one side portion along a length direction of the one side portion.

4. The sealing device according to claim 2,
wherein a distance between the first rotating shaft and the second rotating shaft is adjusted so that a portion having different sealing strengths is formed along a length direction of the one side portion.

5. The sealing device according to claim 1,
wherein an outer circumferential surface of the rotating body is formed to be flat with respect to the direction of the rotating shaft.

6. The sealing device according to claim 5,
wherein the outer circumferential surface of the rotating body comprises a round portion having a rounded edge.

7. The sealing device according to claim 5,
wherein the outer circumferential surface of the rotating body comprises an inclined portion inclined with respect to a direction of the rotating shaft.

8. The sealing device according to claim 2,
wherein the first rotating body and the second rotating body are adjustable in height.

9. The sealing device according to claim 2,
wherein the first rotating body and the second rotating body are in the form of a cylinder having different heights.

10. The sealing device according to claim 9,
wherein the first rotating body is in the form of a cylinder having a first height, and
the second rotating body is in the form of a cylinder having a second height smaller than the first height and comprises a plurality of rotating units provided along the second rotating shaft.

11. The sealing device according to claim 10,
wherein heat and pressure are transferred to some of the plurality of rotating units.

12. The sealing device according to claim 1,
wherein the support unit is a gripper configured to be movable in the vertical direction with respect to the one side portion.

13. The sealing device according to claim 12,
wherein the gripper is provided in plurality along the one side portion.

14. The sealing device according to claim 12,
wherein an end of the gripper that grips the one side portion and the one side portion are in surface contact.

15. The sealing device according to claim 1,
wherein the support unit comprises adsorbers adsorbed on both sides of the one side portion to support the one side portion.

16. The sealing device according to claim 1, further comprising:
a moving unit configured to move the support unit in a predetermined direction.

17. The sealing device according to claim 16,
wherein the support path where the support unit moves through the moving unit is formed so as not to interfere with the sealing tool.

18. The sealing device according to claim 1, further comprising:
a trailer configured to move while supporting the other side portion provided on an opposite side of the one side portion based on the electrode assembly.

19. A manufacturing method for secondary batteries comprising:
a supporting step of supporting one open side portion of a secondary battery in which an electrode assembly is embedded in a case using a support unit so that the one open side portion faces upward with respect to the ground;
a moving step of moving the support unit in a predetermined direction to move the secondary battery in the predetermined direction; and
a sealing step of sealing the one side portion using rotating bodies disposed at both sides of the one side portion.

20. The manufacturing method for secondary batteries according to claim 19,
wherein the sealing step comprises a non-uniform sealing process in which a portion having different sealing strengths along a length direction of the one side portion is formed by adjusting a distance between the rotating bodies.

21. The manufacturing method for secondary batteries according to claim 19,
wherein the sealing step comprises a process of sealing by selectively transferring heat and pressure to the rotating bodies.
